# EUROPÄISCHE PATENTANMELDUNG

(11) **EP 1 002 684 A2**
(43) Veröffentlichungstag der Anmeldung: **24.05.2000**
(21) Anmeldenummer: 99119968.8
(22) Anmeldetag: 12.10.1999
(51) Int. Cl.: B60K 17/26, B60K 17/00

(54) **Berghaltevorrichtung in einem Kraftfahrzeug und Verfahren zur Steuerung der Berghaltevorrichtung**

(30) Priorität: 19.11.1998 DE 19853345
(71) Anmelder: Volkswagen Aktiengesellschaft, 38436 Wolfsburg (DE)
(72) Erfinder: Petersen, Rainer, Dipl.-Ing., 38444 Wolfsburg (DE); Adamis, Panagiotis, Prof., 38442 Wolfsburg (DE); Hofmann, Lars, 04600 Altenburg (DE)

(57) **Zusammenfassung**

Eine in einem Kraftfahrzeug vorgesehene Berghaltevorrichtung (1) weist zwei Freilaufkupplungen (2, 3) auf, die in einem Antriebsstrang des Kraftfahrzeuges angeordnet sind. Die Freilaufkupplungen (2, 3) sind in entgegengesetzten Drehrichtungen sperrend wirksam und aktivierbar und deaktivierbar ausgebildet.

Das Verfahren zur Steuerung einer Berghaltevorrichtung (1) in einem Kraftfahrzeug sieht vor, daß Getriebeparameter ermittelt und von einem Steuergerät ausgewertet werden. Das Steuergerät wirkt derart auf zwei Freilaufkupplungen (2, 3), die in entgegengesetzten Drehrichtungen sperrend wirksam sind, ein, daß die Freilaufkupplungen (2, 3) in Abhängigkeit der Getriebeparameter aktiviert und deaktiviert werden.

## Beschreibung

Die Erfindung beschäftigt sich mit einer Berghaltevorrichtung in einem Kraftfahrzeug und mit einem Verfahren zur Steuerung einer solchen Berghaltevorrichtung.

Beim Betrieb von Kraftfahrzeugen besteht das grundsätzliche Problem, daß es ausgehend von einem Fahrzeugstillstand an einer Steigung aufgrund von Koordinierungsschwierigkeiten zwischen einer Betätigung von Bremse, Gas und Kupplung zu einem unerwünschten Zurückrollen des Kraftfahrzeuges kommen kann. In Abhängigkeit von einer Gestaltung von Kupplung und Getriebe, sind unterschiedliche Berghalteeinrichtungen vorgeschlagen und realisiert worden. Neben Berghalteeinrichtungen, die mit Hilfsenergie betrieben werden und meist auf Kupplungen und Bremsen einwirken, sind auch solche bekannt geworden, die im wesentlichen mechanisch funktionieren und somit ohne Hilfsenergie betreibbar sind.

Aus der US 48 67 291 ist beispielsweise eine Berghaltevorrichtung bekannt, die eine lösbare Kugelfreilaufkupplung aufweist und mit einer Nebenwelle eines manuellen Schaltgetriebes in Verbindung steht. Durch die Verbindung mit der Nebenwelle, die unabhängig von der Fahrtrichtung des Kraftfahrzeuges vom Antriebsmotor immer in die gleiche Drehrichtung angetrieben wird, wirkt die Berghaltevorrichtung gleichermaßen bei einem Rückwärtsrollen mit eingelegtem Vorwärtsgang und bei einem Vorwärtsrollen mit eingelegtem Rückwärtsgang sperrend. Durch eine Betätigung eines hydraulischen Stellgliedes, mittels der die Kugelfreilaufkupplung entgegen einer Anpreßkraft eines Federelementes lösbar ist, wird ein bedarfsweises Zurückrollen ermöglicht, z.B. um das Schaltgetriebe zur Erleichterung eines Gangwechsels zu entlasten. In der DE 43 33 787 A1 wird eine Fahrzeuggetriebe - Berghalteeinrichtung mit ausrückbarer Zahnkupplung vorgeschlagen, die ebenfalls mit einer Nebenwelle eines manuellen Schaltgetriebes in Verbindung steht. In diesem Fall ist die Zahnkupplung selektiv durch eine Steuerung eines wirksamen hydraulischen Druckes ein- und auskuppelbar. Eine Sperrwirkung ergibt sich aus der besonderen Ausbildung der Zähne der Zahnkupplung, durch die eine Relativbewegung in einer Drehrichtung ermöglicht und eine Bewegung in der Gegenrichtung verhindert wird. Aus der DE 196 20 131 A1 ist eine Rücklaufsperre für Kraftfahrzeuge bekannt, bei der eine Freilaufeinrichtung auf einer Getriebewelle eines Schaltgetriebes angeordnet ist. Die Rücklaufsperre ist nur bei einem Rückwärtsrollen mit eingelegtem Vorwärtsgang wirksam. Dadurch, daß die Rücklaufsperre eine mit dem hydraulischen Bremssystem des Kraftfahrzeuges in Verbindung stehende hydraulisch betätigbare Reibkupplung aufweist, ist die Rücklaufsperre zum Zwecke eines kontrollierten Rückwärtsrollens durch eine Betätigung des Bremspedales lösbar.

Alle beschriebenen Berghaltevorrichtungen stehen jeweils mit einem manuellen Schaltgetriebe in Verbindung und erfordern gewisse Modifikationen des jeweiligen Schaltgetriebes, z.B. in Form eines aus einem Getriebegehäuse überstehenden Wellenendes und von Befestigungsmöglichkeiten am Getriebegehäuse zur Aufnahme des Gehäuses der jeweiligen Berghaltevorrichtung.

Es stellt sich daher das Problem, eine mechanisch wirksame Berghaltevorrichtung bereitzustellen, die unabhängig von einer speziellen Getriebebauart weitgehend an einer beliebigen Stelle eines Antriebsstranges montierbar und in beiden Drehrichtungen sperrbar ist. Des weiteren soll ein Verfahren zur Steuerung einer solchen Berghaltevorrichtung aufgezeigt werden.

Das Problem der Berghaltevorrichtung wird durch die Merkmale des Anspruches 1 gelöst, weitere vorteilhafte Ausgestaltungsmerkmale der Berghaltevorrichtung ergeben sich aus den nachfolgenden Unteransprüchen 2 bis 11. Das Problem des Verfahrens wird durch die Merkmale des Anspruches 12 gelöst, vorteilhafte Weiterbildungen sind in den Unteransprüchen 13 und 14 angegeben.

Die in einem Kraftfahrzeug vorgesehene Berghaltevorrichtung weist zwei Freilaufkupplungen auf, die in einem Antriebsstrang des Kraftfahrzeuges angeordnet sind. Die Freilaufkupplungen sind in entgegengesetzten Drehrichtungen sperrend wirksam und aktivierbar und deaktivierbar ausgebildet.

Die erfindungsgemäße Berghaltevorrichtung funktioniert rein mechanisch, d.h. sie ist ohne Hilfsenergie betreibbar, was im Hinblick auf den Gesamtwirkungsgrad des Antriebsstranges vorteilhaft ist. Die Berghaltevorrichtung kann im Prinzip an einer beliebigen Stelle des Antriebsstranges, z.B. zwischen einem Getriebe und einer Kardanwelle, zwischen der Kardanwelle und einem Achsdifferential, oder an einer beliebigen Stelle auf der Kardanwelle, angeordnet werden. Die Berghaltevorrichtung ist unabhängig von einer bestimmten Getriebebauart und kann sowohl bei Kraftfahrzeugen mit manuell bzw. automatisch schaltbaren Stufengetrieben als auch bei Kraftfahrzeugen mit stufenlos variablen Getrieben verwendet werden.

Damit ist das der Erfindung zugrundeliegende Problem gelöst.

Im folgenden werden zweckmäßige Ausgestaltungen der erfindungsgemäßen Berghaltevorrichtung näher erläutert.

Die Freilaufkupplungen der Berghaltevorrichtung können Stellelemente aufweisen, durch die die Freilaufkupplungen aktivierbar und deaktivierbar sind. Die Stellelemente können mechanisch oder mit Hilfsenergie betreibbar ausgebildet sein. Durch eine Verwendung von Stellelementen wird eine unmittelbare Betätigung der Freilaufkupplungen zur Aktivierung und Deaktivierung vermieden und somit der Bedienungskomfort erhöht. Mechanische Stellelemente haben den Vorteil ohne Hilfsenergie auszukommen und sind daher für sehr sparsame Kraftfahrzeuge geeignet. Mit Hilfsenergie betreibbare Stellelemente sind in der Regel elektronisch steuerbar und eignen sich für eine rechnergestützte Betätigung der Freilaufkupplungen.

Die Stellelemente der Freilaufkupplungen können einfach oder doppelt wirkend ausgebildet sein. Einfach wirkend bedeutet, daß die Stellelemente nur in einer Richtung wirksam sind, d.h. nur zur Aktivierung oder Deaktivierung genutzt werden. Eine jeweilige Gegenbewegung erfolgt dann automatisch, beispielsweise durch Fliehkräfte, Federkräfte und / oder Kontaktkräfte zwischen entsprechend ausgebildeten Formteilen.

Die Berghaltevorrichtung kann eine Steuervorrichtung aufweisen, die auf die Stellelemente der Freilaufkupplungen einwirkt und derart ausgebildet und angeordnet ist, daß die Freilaufkupplungen in Abhängigkeit von Getriebeparametern aktivierbar und deaktivierbar sind. Die Verwendung einer Steuervorrichtung ist vorteilhaft, da im Gegensatz zu einer manuellen Betätigung der Freilaufkupplungen eine Fehlbedienung weitgehend ausgeschlossen ist. Unter einer Betätigung der Freilaufkupplungen in Abhängigkeit von Getriebeparametern ist zu verstehen, daß bei einem eingelegten Vorwärtsgang diejenige der beiden Freilaufsperren aktiviert wird, durch die ein Rückwärtsrollen des Kraftfahrzeuges verhinderbar ist, und daß bei einem eingelegten Rückwärtsgang die andere der beiden Freilaufkupplungen aktiviert wird, durch die ein Vorwärtsrollen des Kraftfahrzeuges verhinderbar ist.

Die Steuervorrichtung der Berghaltevorrichtung kann mit einem Bremssystem in Verbindung stehen und derart ausgebildet und angeordnet sein, daß zur Aktivierung und Deaktivierung der Freilaufkupplungen eine Bremsbetätigung erforderlich ist. Zur Vermeidung von Belastungsspitzen im Antriebsstrang ist es vorteilhaft, wenn das Kraftfahrzeug bei einem Wechsel von einer der beiden Freilaufkupplungen auf die andere, d.h. beispielsweise bei einem Schaltvorgang von einem Vorwärtsgang in einen Rückwärtsgang, stillsteht, was weitgehend durch die Bremsbetätigung sichergestellt wird.

Die Steuervorrichtung der Berghaltevorrichtung kann derart ausgebildet und angeordnet sein, daß in einer Parksperrentunktion eine gleichzeitige Aktivierung der beiden Freilaufkupplungen vorgesehn ist. Die erfindungsgemäße Berghaltevorrichtung kann in idealer Weise auch als Parksperre genutzt werden. Hierzu werden beide der Freilaufkupplungen in einer neutralen Schaltposition des Getriebes aktiviert und damit ein Wegrollen des Kraftfahrzeuges in beiden Richtungen durch ein Sperren des Antriebsstranges verhindert. Das gleichzeitige Aktivieren beider Freilaufkupplungen erfolgt vorteilhaft bei ruhendem, d.h. gebremstem Kraftfahrzeug.

Jede der Freilaufkupplungen kann als Zahnklauenkupplung ausgebildet sein, wobei jeweils ein mit einem rotierenden Bauteil des Antriebsstranges verbundenes Zahnklauenrad und ein mit einem feststehenden Bauteil des Kraftfahrzeuges in Verbindung stehendes schaltbares Sperrbauteil vorgesehen ist. Eine Zahnklauenkupplung ist ein bekanntes Maschinenelement, sie weist ein Zahnklauenrad und ein Sperrbauteil auf, die beide Zahnklauen aufweisen, die im eingerückten Zustand in Kontakt treten. Dabei sind die Zahnklauen derart ausgebildet und angeordnet, daß die Zahnklauen in einer bestimmten Drehrichtung übereinandergleiten, so daß eine Drehung des Zahnklauenrades möglich ist, während eine Bewegung in einer Gegenrichtung durch ein formschlüssiges Ineinandergreifen der Zahnklauen verhindert wird.

Jede der Freilaufkupplungen kann als Rollenfreilaufkupplung mit einer schaltbaren Kupplung ausgebildet sein, wobei jeweils die Rollenfreilaufkupplung mit dem rotierenden Bauteil des Antriebsstranges und einem rotierbaren Teil der schaltbaren Kupplung verbunden ist, und ein nichtrotierbarer Teil der schaltbaren Kupplung mit dem feststehenden Bauteil des Kraftfahrzeuges in Verbindung steht. Auch Rollenfreilaufkupplungen sind allgemein bekannt. Durch die schaltbare Kupplung wird eine Deaktivierung einer in einer Drehrichtung wirksamen Sperrwirkung ermöglicht.

Die Freilaufkupplungen können Federelemente aufweisen, die derart ausgebildet und angeordnet sind, daß die Sperrbauteile bzw. die schaltbaren Kupplungen in unbetätigtem Zustand der Stellelemente in einer ausgerückten Position gehalten werden. Eine solche Anordnung hat den Vorteil, daß eine ungewollte Aktivierung einer Freilaufkupplung, die z.B. bei einer Störung einer Fremdenergieversorgung auftreten kann, weitgehend ausgeschlossen ist. Nur die Aktivierung einer oder beider der Freilaufkupplungen erfordert Energie und setzt eine Aktivität des Fahrers oder des Steuergerätes voraus. Die Deaktivierung erfolgt automatisch durch Rückstellkräfte der Federn.

Die Freilaufkupplungen können Federelemente aufweisen, die derart ausgebildet und angeordnet sind, daß die Sperrbauteile bzw. die schaltbaren Kupplungen in unbetätigtem Zustand der Stellelemente in einer eingerückten Position gehalten werden. In diesem Fall wird das Fahrzeug automatisch und ohne Hilfsenergie durch Aktivierung beider Freilaufsperren in einer Parksperrenfunktion festgehalten. Zur Deaktivierung einer oder beider der Freilaufsperren ist eine Aktivität des Fahrers oder des Steuergerätes erforderlich. Damit ist neben einer sicheren Funktion der Parksperre eine erhöhte Diebstahlsicherheit gegeben.

Die Freilaufkupplungen können durch ein Kopplungselement in Verbindung stehen, das derart ausgebildet und angeordnet ist, daß ein Einrücken des Sperrbauteiles bzw. der schaltbaren Kupplung einer der Freilaufkupplungen ein Ausrücken des Sperrbauteiles bzw. der schaltbaren Kupplung der jeweils anderen Freilaufkupplung bewirkt. Außer in einer Parksperrenfunktion ist ein Unterbinden eines Zurückrollens immer in nur einer Richtung erforderlich. Es ist daher vorteilhaft, wenn die Aktivierung einer der beiden Freilaufkupplungen automatisch die Deaktivierung der jeweils anderen Freilaufkupplung zur Folge hat. Im übrigen reichen in diesem Fall einfach wirksame Stellelemente aus. Federelemente, durch die Rückstellkräfte erzeugbar sind, können eingespart werden.

Das Verfahren zur Steuerung einer Berghaltevorrichtung in einem Kraftfahrzeug nach Anspruch 1 sieht vor, daß Getriebeparameter ermittelt werden, daß die Getriebeparameter von einem Steuergerät ausgewertet werden, und daß das Steuergerät derart auf zwei Freilaufkupplungen, die in entgegengesetzten Drehrichtungen sperrend wirksam sind, einwirkt, daß die Freilaufkupplungen in Abhängigkeit der Getriebeparameter aktiviert und deaktiviert werden. Durch das Steuergerät wird beispielsweise der aktuell wirksame Gang eines Getriebes, hier als Getriebeparameter bezeichnet, ermittelt und davon abhängig die geeignete der beiden Freilaufkupplungen aktiviert, bzw. im Falle einer neutralen Schaltstufe des Getriebes und ruhendem Fahrzeug beide Freilaufkupplungen als Parksperre aktiviert.

Das Verfahren sieht in einer weitergebildeten Form vor, daß eine Bremsbetätigung ermittelt werden kann, daß die Bremsbetätigung dann von dem Steuergerät registriert wird, und daß das Steuergerät derart auf die beiden Freilaufkupplungen einwirken kann, daß zur Aktivierung und Deaktivierung der Freilaufkupplungen eine Bremsbetätigung erforderlich ist. Ein Übergang von einer Vorwärtsfahrt eines Kraftfahrzeuges auf eine Rückwärtsfahrt ist mit einem Nulldurchgang der Fahrgeschwindigkeit verbunden, der im allgemeinen durch eine Bremsbetätigung erreicht wird. Zur Vermeidung von Belastungsspitzen und Komfortsteigerung ist es vorteilhaft und ohne großen Aufwand realisierbar, wenn zur Aktivierung und Deaktivierung einer oder beider der Freilaufkupplungen eine Bremsbetätigung erforderlich ist.

In einer weiteren vorteilhaften Ausbildung kann eine Fahrtgeschwindigkeit ermittelt werden, wobei die Fahrtgeschwindigkeit von dem Steuergerät ausgewertet werden kann und das Steuergerät derart auf die beiden Freilaufkupplungen einwirken kann, daß beide Freilaufkupplungen bei einem Überschreiten einer festgelegten Grenzgeschwindigkeit deaktiviert werden, und daß zur Aktivierung der Freilaufkupplungen eine Unterschreitung der Grenzgeschwindigkeit erforderlich ist. Bei höheren Geschwindigkeiten ist die Aktivierung einer Freilaufsperre überflüssig, da in diesem Zustand ein ungewolltes Zurückrollen nicht auftreten kann. Zur Schonung mechanischer Bauteile der Freilaufkupplungen ist es daher von Vorteil, wenn eine aktivierte Freilaufkupplung automatisch bei Überschreiten der Grenzgeschwindigkeit deaktiviert wird und erst bei Unterschreiten der Grenzgeschwindigkeit wieder aktiviert wird. Da bei einem Eintreten eines ungewollten Zurückrollens zuvor ein Übergang von einer Bewegung in eine gewollte Richtung in eine Gegenrichtung erfolgt, ist die Aktivierung der entsprechenden Freilaufkupplung erst bei Unterschreiten der Grenzgeschwindigkeit auch aus Sicherheitsgründen völlig ausreichend.

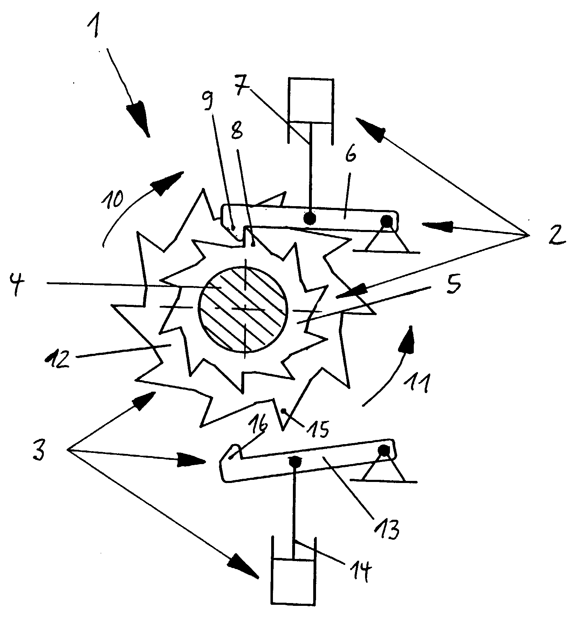

In der nachfolgenden Figur 1 ist eine Ausführungsform der erfindungsgemäßen Berghaltevorrichtung dargestellt.

Die Figur zeigt eine in einem Kraftfahrzeug angeordnete Berghaltevorrichtung 1, die zwei Freilaufkupplungen 2, 3 aufweist, eine erste Freilaufkupplung 2 und eine zweite Freilaufkupplung 3. Jede der beiden Freilaufkupplungen 2, 3 ist als Zahnklauenkupplung ausgebildet und steht mit einer Welle 4 eines Antriebsstranges des Kraftfahrzeuges in Verbindung. Die erste Freilaufkupplung 2 weist ein erstes, mit der Welle 4 verbundenes Zahnklauenrad 5, ein erstes Sperrbauteil 6 und ein erstes, mit dem ersten Sperrbauteil 6 in Verbindung stehendes Stellelement 7 auf. Mittels des ersten Stellelementes 7 ist das erste Sperrbauteil 6 in das erste Zahnklauenrad 5 einrück- und ausrückbar. Im in der Figur dargestellten eingerückten Zustand des ersten Sperrbauteiles 6, d.h. bei ineinandergreifenden Zahnklauen 8, 9 des ersten Zahnklauenrades 5 und des ersten Sperrbauteiles 6, ist die erste Freilaufkupplung 2 aktiviert. Durch die Ausbildung der Zahnklauen 8, 9 des ersten Zahnklauenrades 5 und des ersten Sperrbauteiles 6 wird im aktivierten Zustand der ersten Freilaufkupplung 2 eine Drehung der Welle 4 in einer vorbestimmten Drehrichtung 10 ermöglicht und eine Drehung der Welle 4 in einer Gegendrehrichtung 11 verhindert. Die zweite Freilaufkupplung 3 ist prinzipiell in gleicher Weise aufgebaut wie die erste Freilaufkupplung 2 und weist ein zweites, mit der Welle 4 verbundenes Zahnklauenrad 12, ein zweites Sperrbauteil 13 und ein zweites, mit dem zweiten Sperrbauteil in Verbindung stehendes Stellelement 14 auf. Im Unterschied zur ersten Freilaufkupplung 2 sind die Zahnklauen 15, 16 des zweiten Zahnklauenrades 12 und des zweiten Sperrbauteiles 13 derart ausgebildet, daß im aktivierten Zustand der zweiten Freilaufkupplung 3 eine Drehung der Welle 4 in der Gegendrehrichtung 11 ermöglicht und eine Drehung der Welle 4 in der vorbestimmten Drehrichtung 10 verhindert wird. Durch die Ausbildung und Anordnung der Berghaltevorrichtung 1 ist ein Rückwärtsrollen des Kraftfahrzeuges, z.B. bei eingelegtem Vorwärtsgang, und ein Vorwärtsrollen des Kraftfahrzeuges, z.B. bei eingelegtem Rückwärtsgang, zuverlässig verhinderbar. Des weiteren besteht die Möglichkeit, die Berghaltevorrichtung 1 durch eine gleichzeitige Aktivierung beider Freilaufsperren 2, 3 als Parksperre zu nutzen.

### BEZUGSZEICHENLISTE

- 1: Berghaltevorrichtung
- 2: erste Freilaufkupplung
- 3: zweite Freitaufkupplung
- 4: Welle
- 5: erstes Zahnklauenrad
- 6: erstes Sperrbauteil
- 7: erstes Stellelement
- 8: Zahnklaue (des ersten Zahnklauenrades)
- 9: Zahnklaue (des ersten Sperrbauteiles)
- 10: Drehrichtung
- 11: Gegendrehrichtung
- 12: zweites Zahnklauenrad
- 13: zweites Sperrbauteil
- 14: zweites Stellelement
- 15: Zahnklaue (des zweiten Zahnklauenrades)
- 16: Zahnklaue (des zweiten Sperrbauteiles)

## Patentansprüche

1. Berghaltevorrichtung (1) in einem Kraftfahrzeug mit folgenden Merkmalen:
1. zwei Freilaufkupplungen (2, 3),
1.1 die in einem Antriebsstrang des Kraftfahrzeuges angeordnet,
1.2 die in entgegengesetzten Drehrichtungen sperrend wirksam,
1.3 und die aktivierbar und deaktivierbar sind.

2. Berghaltevorrichtung nach Anspruch 1, **dadurch gekennzeichnet**, daß
die Freilaufkupplungen (2, 3) Stellelemente (7, 14) aufweisen, daß die Freilaufkupplungen (2, 3) durch die Stellelemente (7, 14) aktivierbar und deaktivierbar sind, und daß die Stellelemente (7, 14) mechanisch oder mit Hilfsenergie betreibbar ausgebildet sind.

3. Berghaltevorrichtung nach Anspruch 1 oder 2, **dadurch gekennzeichnet,** daß
die Stellelemente (7, 14) einfach oder doppelt wirkend ausgebildet sind.

4. Berghaltevorrichtung nach Anspruch 2 oder 3, **dadurch gekennzeichnet,** daß
eine Steuervorrichtung vorgesehen ist, daß die Steuervorrichtung auf die Stellelemente (7, 14) einwirkt, und daß die Freilaufkupplungen (2, 3) durch die Steuervorrichtung in Abhängigkeit von Getriebeparametern aktivierbar und deaktivierbar sind.

5. Berghaltevorrichtung nach Anspruch 4, **dadurch gekennzeichnet**, daß
die Steuervorrichtung mit einem Bremssystem in Verbindung steht und derart ausgebildet und angeordnet ist, daß zur Aktivierung und Deaktivierung der Freilaufkupplungen (2, 3) eine Bremsbetätigung erforderlich ist.

6. Berghaltevorrichtung nach Anspruch 4 oder 5, **dadurch gekennzeichnet**, daß
die Steuervorrichtung in einer Parksperrenfunktion eine gleichzeitige Aktivierung der beiden Freilaufkupplungen (2, 3) vorsieht.

7. Berghaltevorrichtung nach einem der Ansprüche 1 bis 6,
**dadurch gekennzeichnet**, daß
jede der Freilaufkupplungen (2, 3) als Zahnklauenkupplung ausgebildet ist, wobei jeweils ein mit einem rotierenden Bauteil des Antriebsstranges verbundenes Zahnklauenrad (5, 12) und ein mit einem feststehenden Bauteil das Kraftfahrzeuges in Verbindung stehendes schaltbares Sperrbauteil (6, 13) vorgesehen ist.

8. Berghaltevorrichtung nach einem der Ansprüche 1 bis 6,
**dadurch gekennzeichnet**, daß
jede der Freilaufkupplungen (2, 3) als Rollenfreilaufkupplung mit einer schaltbaren Kupplung ausgebildet ist, daß jeweils die Rollenfreilaufkupplung mit dem rotierenden Bauteil des Antriebsstranges und einem rotierbaren Teil der schaltbaren Kupplung verbunden ist, und daß ein nichtrotierbarer Teil der schaltbaren Kupplung mit dem feststehenden Bauteil des Kraftfahrzeuges in Verbindung steht.

9. Berghaltevorrichtung nach Anspruch 7 oder 8, **dadurch gekennzeichnet**, daß
die Freilaufkupplungen (2, 3) Federelemente aufweisen, die derart ausgebildet und angeordnet sind, daß die Sperrbauteile (6, 13) bzw. die schaltbaren Kupplungen in unbetätigtem Zustand der Stellelemente (7, 14) in einer ausgerückten Position gehalten werden.

10. Berghaltevorrichtung nach Anspruch 7 oder 8, **dadurch gekennzeichnet,** daß
die Freilaufkupplungen (2, 3) Federelemente aufweisen, die derart ausgebildet und angeordnet sind, daß die Sperrbauteile (6, 13) bzw. die schaltbaren Kupplungen in unbetätigtem Zustand der Stellelemente (7, 14) in einer eingerückten Position gehalten werden.

11. Berghaltevorrichtung nach einem der Ansprüche 7 oder 8,
**dadurch gekennzeichnet,** daß
die Freilaufkupplungen (2, 3) durch ein Kopplungselement in Verbindung stehen, daß das Kopplungselement derart ausgebildet und angeordnet ist, daß ein Einrücken des Sperrbauteiles (6, 13) bzw. der schaltbaren Kupplung einer der Freilaufkupplungen (2, 3) ein Ausrücken des Sperrbauteiles (6, 13) bzw. der schaltbaren Kupplung der jeweils anderen Freilaufkupplung (2, 3) bewirkt.

12. Verfahren zur Steuerung einer Berghaltevorrichtung in einem Kraftfahrzeug nach
Anspruch 1, **dadurch gekennzeichnet**, daß
Getriebeparameter ermittelt werden, daß die Getriebeparameter von einem Steuergerät ausgewertet werden, und daß das Steuergerät derart auf zwei Freilaufkupplungen (2, 3) , die in entgegengesetzten Drehrichtungen sperrend wirksam sind, einwirkt, daß die Freilaufkupplungen (2, 3) in Abhängigkeit der Getriebeparameter aktiviert und deaktiviert werden.

13. Verfahren nach Anspruch 12, **dadurch gekennzeichnet**, daß
eine Bremsbetätigung ermittelt wird, daß die Bremsbetätigung von dem Steuergerät registriert wird, und daß das Steuergerät derart auf die beiden Freilaufkupplungen (2, 3) einwirkt, daß zur Aktivierung und Deaktivierung der Freilaufkupplungen (2, 3) eine Bremsbetätigung erforderlich ist.

14. Verfahren nach Anspruch 12 oder 13, **dadurch gekennzeichnet**, daß
eine Fahrtgeschwindigkeit ermittelt wird, daß die Fahrtgeschwindigkeit von dem Steuergerät ausgewertet wird, und daß das Steuergerät derart auf beide der Freilaufkupplungen (2, 3) einwirkt, daß diese bei einem Überschreiten einer festgelegten Grenzgeschwindigkeit deaktiviert werden, und daß zur Aktivierung der Freilaufkupplungen (2, 3) eine Unterschreitung der Grenzgeschwindigkeit erforderlich ist.
